# EUROPEAN PATENT APPLICATION

(11) **EP 4 752 175 A1**
(43) Date of publication of application: **03.06.2026**
(21) Application number: 24845897.8
(22) Date of filing: 16.07.2024
(51) Int. Cl.: C08L 69/00, C08L 83/04, C08K 5/5399, C08G 64/18

(54) **POLYCARBONATE RESIN COMPOSITION AND ARTICLE PRODUCED THEREFROM**

(30) Priority: 27.07.2023 KR 20230098034
(71) Applicant: LOTTE CHEMICAL CORPORATION, Seoul 05551 (KR)
(72) Inventor: KIM, Nam Hyun, Uiwiang-si Gyeonggi-do 16073 (KR); KANG, Tae Gon, Uiwiang-si Gyeonggi-do 16073 (KR); KIM, Su Ji, Uiwiang-si Gyeonggi-do 16073 (KR)
(74) Representative: Germain Maureau
(86) International application number: PCT/KR2024/010174
(87) International publication number: WO 2025/023594

(57) **Abstract**

A polycarbonate resin composition of the present invention comprises: about 100 parts by weight of a base resin comprising about 95 wt% or less of a polycarbonate resin and about 5 wt% or more of a polysiloxane-polycarbonate copolymer resin; about 1-15 parts by weight of a phosphazene compound; and about 0.1-2 parts by weight of polydimethylsiloxane having a terminal reactive group and having a kinematic viscosity of about 5-200 cSt measured at 40°C, in accordance with ASTM D445. The polycarbonate resin composition has excellent transparency, flame retardancy (in thin films), chemical resistance, impact resistance, and balance of said properties.

## Description

### [Technical Field]

The present invention relates to a polycarbonate resin composition and a molded article produced therefrom. More particularly, the present invention relates to a polycarbonate resin composition having excellent properties in terms of transparency, flame retardancy (in thin films), chemical resistance, impact resistance, and property balance therebetween, and a molded article produced therefrom.

### [Background Art]

Due to excellent mechanical strength, heat resistance, transparency, and the like, polycarbonate resins are widely applied to various fields including office automation equipment, electrical/electronic products, construction materials, and the like. In particular, for mobile electrical/electronic products, thin-film flame retardant materials are required due to application of fast charging and high capacity batteries and slim thickness, and materials with excellent transparency and chemical resistance (post-painting impact resistance) are required to increase design freedom.

In order to improve flame retardancy of a resin composition comprising a polycarbonate resin and a molded article comprising the same, flame retardants and flame retardant aids may be used together. In general, a fluorinated polyolefin compound and the like may be used as the flame retardant aids. However, when a fluorinated polyolefin compound and the like are used, the polycarbonate resin can suffer from deterioration in transparency and the like.

Therefore, there is a need for development of a polycarbonate resin composition that has excellent properties in terms of transparency, flame retardancy (in thin films), chemical resistance, impact resistance, property balance therebetween, and the like.

The background technique of the present invention is disclosed in Korean Patent Laid-open Publication No. 10-2022-0056273 and the like.

### [Disclosure]

### [Technical Problem]

It is one aspect of the present invention to provide a thermoplastic resin composition that has excellent properties in terms of transparency, flame retardancy (in thin films), chemical resistance, impact resistance, property balance therebetween, and the like.

It is another aspect of the present invention to provide a molded article produced from the thermoplastic resin composition.

The above and other aspects of the present invention can be achieved by the present invention described below.

### [Technical Solution]

1. One aspect of the present invention relates to a polycarbonate resin composition. The polycarbonate resin composition includes: about 100 parts by weight of a base resin comprising about 95 wt% or less of a polycarbonate resin and about 5 wt% or more of a polysiloxane-polycarbonate copolymer resin; about 1 part by weight to about 15 parts by weight of a phosphazene compound; and about 0.1 parts by weight to about 2 parts by weight of a polydimethylsiloxane having a terminal reactive group and having a kinematic viscosity of about 5 cSt to about 200 cSt, as measured at 40°C in accordance with ASTM D445.
2. In embodiment 1, the polycarbonate-polysiloxane copolymer resin may be present in an amount of about 70 wt% to about 99 wt% of a polycarbonate block and about 1 wt% to about 30 wt% of a polysiloxane block.
3. In embodiment 1 or 2, the polycarbonate-polysiloxane copolymer resin may have a weight average molecular weight of about 10,000 g/mol to about 50,000 g/mol, as measured by gel permeation chromatography (GPC).
4. In embodiments 1 to 3, the phosphazene compound may be a cyclic phosphazene compound.
5. In embodiments 1 to 4, the polydimethylsiloxane having a terminal reactive group may comprise at least one of a hydroxyl group, an epoxy group, and a maleic anhydride group.
6. In embodiments 1 to 5, a weight ratio of the polydimethylsiloxane having a terminal reactive group to the phosphazene compound may range from about 1:2 to about 1:70.
7. In embodiments 1 to 6, the polycarbonate resin composition may have a haze of about 3% or less and a light transmittance of about 86% or more, as measured on a 1 mm thick specimen in accordance with ASTM D1003.
8. In embodiments 1 to 7, the polycarbonate resin composition may have a flame retardancy of V-2 or higher, as measured on a 0.6 mm thick specimen by the UL-94 vertical test method.
9. In embodiments 1 to 8, the polycarbonate resin composition may have a fracture height of about 50 cm or higher, at which a 2 mm thick specimen is broken upon application of impact with a drop test apparatus using a 2 kg weight in a DuPont drop test method after the specimen is immersed in a thinner solution for 2 minutes and 30 seconds, dried at 80°C for 20 minutes, and left for 24 hours at room temperature.
10. In embodiments 1 to 9, the polycarbonate resin composition may have a notched Izod impact strength of about 55 kgf·cm/cm or more, as measured on a 1/8" thick specimen in accordance with ASTM D256.
12. Another aspect of the present invention relates to a molded article. The molded article is produced from the thermoplastic resin composition according to any one of embodiments 1 to 10.

### [Advantageous Effects]

The present invention provides a thermoplastic resin composition that has excellent properties in terms of transparency, flame retardancy (in thin films), chemical resistance, impact resistance, property balance therebetween and the like, and a molded article produced therefrom.

### [Best Mode]

Hereinafter, embodiments of the present invention will be described in detail.

A polycarbonate resin composition according to the present invention comprises (A) a polycarbonate resin; (B) a polysiloxane-polycarbonate copolymer resin; (C) a phosphazene compound; and (D) a polydimethylsiloxane having a terminal reactive group.

As used herein to represent a numerical range, "a to b" is defined as "≥ a and ≤ b".

### (A) Polycarbonate resin

The polycarbonate resin according to one embodiment of the invention may include any polycarbonate resin used in typical thermoplastic resin compositions. For example, the polycarbonate resin may be an aromatic polycarbonate resin prepared by reacting diphenols (aromatic diol compounds) with a carbonate precursor, such as phosgene, halogen formate, and carbonate diester.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, 2,2-bis(3-methyl-4-hydroxyphenyl)propane, 2,2-bis(3,5-dimethyl-4-hydroxyphenyl)propane, and the like, without being limited thereto. For example, the diphenol may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the carbonate precursors may include dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, bishaloformate, and the like. These may be used alone or as mixtures thereof.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 40,000 g/mol, as measured by gel permeation chromatography (GPC). Within this range, the thermoplastic resin composition can have good mechanical properties, heat resistance, and the like.

In some embodiments, the polycarbonate resin may be present in an amount of about 95 wt% or less, for example, about 30 wt% to about 85 wt%, specifically about 45 wt% to about 80 wt%, based on 100 wt% of a base resin (A+B) comprising the polycarbonate resin (A) and the polysiloxane-polycarbonate copolymer resin (B). If the content of the polycarbonate resin is outside this range, the polycarbonate resin composition can suffer from deterioration in impact resistance, chemical resistance, and the like.

### (B) Polysiloxane-polycarbonate copolymer resin

The polysiloxane-polycarbonate copolymer resin according to one embodiment of the invention may be applied together with the polycarbonate resin, the phosphazene compound, and the polydimethylsiloxane having a terminal reactive group to improve transparency, flame retardancy (in thin films), chemical resistance, impact resistance, property balance, and the like of the polycarbonate resin composition, and comprises a polycarbonate block and a polysiloxane block. For example, the polysiloxane-polycarbonate copolymer resin may be a triblock copolymer of a polycarbonate block/polysiloxane block/polycarbonate block, and the like, without being limited thereto.

In some embodiments, the polysiloxane-polycarbonate copolymer resin may be a polysiloxane-polycarbonate copolymer resin prepared by reacting a siloxane compound represented by Formula 1, an aromatic dihydroxy compound, and a carbonate precursor.

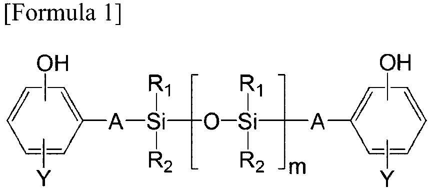

In Formula 1, R₁ and R₂ are each independently a C₁ to C₁₀ alkyl group, a C₆ to C₁₈ aryl group, or a C₁ to C₁₀ alkyl group or C₆ to C₁₈ aryl group having a halogen atom or an alkoxy group; As are each independently a substituted or unsubstituted C₂ to C₂₀ hydrocarbon group, a substituted or unsubstituted C₂ to C₂₀ hydrocarbon group having -O- or -S-; and Ys are each independently a hydrogen atom, a halogen atom, a C₁ to C₁₈ halogenated alkyl group, a cyano group (-CN), or an ester; and m may range from 2 to 1,000, for example, from 4 to 120, specifically from 10 to 100.

In some embodiments, the aromatic dihydroxy compound (diphenols) may be selected from any aromatic dihydroxy compounds typically used in preparation of polycarbonate resins, and may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, without being limited thereto. Specifically, the aromatic dihydroxy compound may be 2,2-bis(4-hydroxyphenyl)propane, 2,2-bis(3,5-dichloro-4-hydroxyphenyl)propane, 1,1-bis(4-hydroxyphenyl)cyclohexane, or the like, preferably 2,2-bis(4-hydroxyphenyl)propane, which is also referred to as bisphenol-A.

In some embodiments, the carbonate precursors may include phosgene, triphosgene, diaryl carbonate, mixtures thereof, and the like. Furthermore, the diaryl carbonates may include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, dicyclohexyl carbonate, and the like, without being limited thereto. These may be used alone or as a mixture thereof. For example, diphenyl carbonate may be used.

In some embodiments, the polycarbonate-polysiloxane copolymer resin may be present in an amount of about 70 wt% to about 99 wt%, for example, about 80 wt% to about 97 wt%, of a polycarbonate block derived from the aromatic dihydroxy compound, and about 1 wt% to about 30 wt%, for example, about 3 wt% to about 25 wt%, of a polysiloxane block derived from the siloxane compound. Within this range, the polycarbonate resin composition can exhibit excellent properties in terms of impact resistance, chemical resistance, flame retardancy, and the like.

In some embodiments, the polycarbonate-polysiloxane copolymer resin may have a weight average molecular weight (Mw) of about 10,000 g/mol to about 50,000 g/mol, for example, about 15,000 g/mol to about 40,000 g/mol, as measured by gel permeation chromatography (GPC). Within this range, the polycarbonate resin composition can have excellent properties in terms of impact resistance, chemical resistance, flame retardancy, moldability, and the like.

In some embodiments, the polycarbonate-polysiloxane copolymer resin may be prepared by a typical method. For example, the aromatic dihydroxy compound, the carbonate precursor, and the siloxane compound may be copolymerized by interfacial condensation polymerization, emulsion polymerization, and the like. In addition, the polycarbonate-polysiloxane copolymer resin may be obtained from commercially available products.

In some embodiments, the polysiloxane-polycarbonate copolymer resin may be present in an amount of about 5 wt% or more, for example, about 15 wt% to about 60 wt%, specifically about 20 wt% to about 55 wt%, based on 100 wt% of the base resin (A+B) comprising the polycarbonate resin (A) and the polysiloxane-polycarbonate copolymer resin (B). If the content of the polysiloxane-polycarbonate copolymer is outside this range, the polycarbonate resin composition can suffer from deterioration in impact resistance, chemical resistance, and the like.

### (C) Phosphazene compound

The phosphazene compound according to one embodiment of the invention may be applied together with the polycarbonate resin, the polysiloxane-polycarbonate copolymer resin, and the polydimethylsiloxane having a terminal reactive group to improve transparency, flame retardancy (in thin films), chemical resistance, impact resistance, property balance, and the like of the polycarbonate resin composition. For example, a cyclic phosphazene compound may be used.

In some embodiments, the phosphazene compound may be a compound represented by Formula 2.

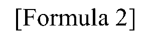

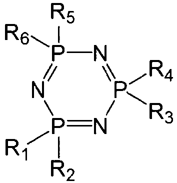

In Formula 2, R₁, R₂, R₃, R₄, R₅ and R₆ are each independently a hydrogen atom, a halogen atom, a substituted or unsubstituted C₁ to C₂₀ alkyl group, a substituted or unsubstituted C₂ to C₇ alkenyl group, a substituted or unsubstituted C₃ to C₂₀ cycloalkyl group, a substituted or unsubstituted C₂ to C₂₀ heterocycloalkyl group, a C₁ to C₂₀ alkoxy group, a C₆ to C₂₀ aryl group, a C₆ to C₂₀ aryloxy group, a C₅ to C₂₀ heteroaryl group, a substituted or unsubstituted C₃ to C₂₀ alkoxycarbonylalkyl group, a substituted or unsubstituted a C₂ to C₂₀ carbonylalkyl group, an amino group, or a hydroxyl group.

Herein, "substituted" means that a hydrogen atom is substituted with a substituent, such as a C₁ to C₁₀ alkyl group, a halogen atom, a nitro group, a cyano group, a hydroxyl group, an amino group, a C₆ to C₁₀ aryl group, a C₃ to C₁₀ cycloalkyl group, a C₃ to C₁₀ heterocycloalkyl group, a C₄ to C₁₀ heteroaryl group, or a combination thereof.

In addition, "alkyl," "alkoxy," and other "alkyl" moiety-containing substituents include both linear and branched forms, "alkenyl" includes both linear and branched forms having 2 to 8 carbon atoms and containing at least one double bond, and "cycloalkyl" includes both saturated monocyclic and saturated bicyclic ring structures having 3 to 20 carbon atoms. In addition, "aryl" refers to a cyclic organic radical derived from an aromatic hydrocarbon by removal of one hydrogen atom and includes single or fused ring systems in which each ring suitably contains 4 to 7, preferably 5 or 6, skeletal atoms. Specific examples of "aryl" may include phenyl, naphthyl, biphenyl, tolyl, and the like, without being limited thereto.

"Heterocycloalkyl" refers to a cycloalkyl group containing 1 to 3 heteroatoms selected from among N, O, and S as a skeletal atom of a saturated cyclic hydrocarbon structure and containing carbon as remaining skeletal atoms of a saturated monocyclic or bicyclic ring structure, and may include, for example, pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxiranyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl, and the like.

"Heteroaryl" refers to an aryl group containing 1 to 3 heteroatoms selected from among N, O, and S as a skeleton atom of an aromatic ring structure and containing carbon as remaining skeleton atoms of the aromatic ring structure. The heteroaryl group includes divalent aryl groups in which the heteroatoms in the ring structure are oxidized or quaternized to form, for example, an N-oxide or a quaternary salt. Specific examples of "heteroaryl" may include furyl, thiophenyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, pyrimidinyl, and the like, without being limited thereto.

In some embodiments, the phosphazene compound may be present in an amount of about 1 part by weight to about 15 parts by weight, for example, about 4 parts by weight to about 12 parts by weight, relative to about 100 parts by weight of the base resin. If the content of the phosphazene compound is less than about 1 part by weight relative to about 100 parts by weight of the base resin, the polycarbonate resin composition can suffer from deterioration in flame retardancy, moldability, and the like, and if the content of the phosphazene compound exceeds about 15 parts by weight, the polycarbonate resin composition can suffer from deterioration in impact resistance, chemical resistance, and the like.

### (D) Polydimethylsiloxane having terminal reactive group

The polydimethylsiloxane having a terminal reactive group according to one embodiment of the invention is applied together with the polycarbonate resin, the polysiloxane-polycarbonate copolymer resin, and the phosphazene compound to improve transparency, flame retardancy (in thin films), chemical resistance, impact resistance, property balance, and the like of the polycarbonate resin composition, and may be polydimethylsiloxane having a terminal reactive group and having a kinematic viscosity of about 5 cSt to about 200 cSt, as measured at 40°C in accordance with ASTM D445.

In some embodiments, the polydimethylsiloxane having a terminal reactive group may have a kinematic viscosity of about 5 cSt to about 200 cSt, for example, about 10 cSt to about 100 cSt, as measured at 40°C in accordance with ASTM D445. If the kinematic viscosity of the polydimethylsiloxane having a terminal reactive group is less than about 5 cSt, the polycarbonate resin composition can suffer from deterioration in thermal stability, moldability, impact resistance, and the like, and if the kinematic viscosity of the polydimethylsiloxane having a terminal reactive group exceeds about 200 cSt, the polycarbonate resin composition can suffer from deterioration in transparency, moldability, and the like.

In some embodiments, the terminal reactive group of the polydimethylsiloxane may comprise at least one of a hydroxyl group, an epoxy group, and a maleic anhydride group.

In some embodiments, the polydimethylsiloxane having a terminal reactive group may be present in an amount of about 0.1 parts by weight to about 2 parts by weight, for example, about 0.2 parts by weight to about 1.5 parts by weight, relative to about 100 parts by weight of the base resin. If the content of the polydimethylsiloxane having a terminal reactive group is less than about 0.1 parts by weight relative to about 100 parts by weight of the base resin, the polycarbonate resin composition can suffer from deterioration in impact resistance, chemical resistance, and the like, and if the content of the polydimethylsiloxane having a terminal reactive group exceeds about 2 parts by weight, the polycarbonate resin composition can suffer from deterioration in transparency, chemical resistance, and the like.

In some embodiments, the weight ratio of the polydimethylsiloxane having a terminal reactive group to the phosphazene compound may range from about 1:2 to about 1:70, for example, from about 1:4 to about 1:60. Within this range, the polycarbonate resin composition can exhibit better properties in terms of heat resistance, flame retardancy, chemical resistance, impact resistance, transparency, and the like.

The polycarbonate resin composition according to one embodiment of the invention may further comprise typical additives, as needed. The additives may include, for example, antioxidants, release agents, lubricants, nucleating agents, antistatic agents, stabilizers, pigments, dyes, mixtures thereof, and the like. The additives may be present in an amount of about 0.001 parts by weight to about 10 parts by weight, relative to about 100 parts by weight of the base resin, without being limited thereto.

The polycarbonate resin composition according to one embodiment of the invention may be prepared by a typical method of preparing a polycarbonate resin composition. For example, the polycarbonate resin composition may be prepared in pellet form by mixing the aforementioned components, followed by melt extrusion at about 200°C to about 300°C, for example, at about 250°C to about 280°C, using a typical twin-screw extruder.

In some embodiments, the polycarbonate resin composition may have a haze of about 3% or less, for example, about 1% to about 2.9%, and a light transmittance of about 86% or more, for example, about 87% to about 95%, as measured on a 1 mm thick specimen in accordance with ASTM D1003.

In some embodiments, the polycarbonate resin composition may have a flame retardancy of V-2 or higher, for example, V-0 or V-1, as measured on a 0.6 mm thick specimen by the UL-94 vertical test method.

In some embodiments, the polycarbonate resin composition may have a fracture height of about 50 cm or higher, for example, about 55 cm to about 90 cm, at which a 2 mm thick specimen is broken upon application of impact with a drop test apparatus using a 2 kg weight in a DuPont drop test method after the specimen is immersed in a thinner solution for 2 minutes and 30 seconds, dried at 80°C for 20 minutes, and left for 24 hours at room temperature.

In some embodiments, the polycarbonate resin composition may have a notched Izod impact strength of about 55 kgf·cm/cm or more, for example, about 60 kgf·cm/cm to about 90 kgf·cm/cm, as measured on a 1/8" thick specimen in accordance with ASTM D256.

A molded article according to the present invention is produced from the thermoplastic resin composition. The thermoplastic resin composition may be prepared in pellet form and the prepared pellets may be produced into various molded articles (products) by various molding methods, such as injection molding, extrusion molding, vacuum molding, casting, and the like. These molding methods are well known to a person having ordinary knowledge in the art. The molded article has excellent properties in terms of transparency, flame retardancy (in thin films), chemical resistance, impact resistance, property balance therebetween, and the like, and can be advantageously used for interior or exterior materials for mobile electric/electronic products.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Polycarbonate resin

A bisphenol-A polycarbonate resin (weight average molecular weight (Mw): about 22,000 g/mol) was used.

### (B) Polysiloxane-polycarbonate copolymer resin

A polysiloxane-polycarbonate copolymer resin containing 6 wt% of polydimethylsiloxane (PDMS) and having a weight average molecular weight (Mw) of about 22,000 g/mol was used.

### (C) Phosphazene compound

A cyclic phosphazene compound (manufacturer: Pharmicell Co. Ltd., product name: Phoretar 201) was used.

### (D) Polydimethylsiloxane

(D1) Polydimethylsiloxane (kinematic viscosity: about 40 cSt) having a terminal reactive group (hydroxyl group) was used.
(D2) Polydimethylsiloxane (manufacturer: Momentive Co. Ltd., product name: PDMS-200, kinematic viscosity: about 40 cSt) was used.

### Examples 1 to 8 and Comparative Examples 1 to 6

The above components were mixed in amounts as listed in Tables 1 and 2 and subjected to extrusion at a temperature of about 260°C, thereby preparing a thermoplastic resin composition in pellet form. Here, extrusion was performed using a twin-screw extruder (L/D=36, diameter: 45 mm) and the prepared pellets were dried at about 80°C for about 5 hours or more and injection-molded in a 6 oz. injection molding machine (molding temperature: 320°C), thereby preparing specimens. The prepared specimens were evaluated as to the following properties by the following method, and results are shown in Tables 1 and 2.

### Property Measurement

(1) Haze and light transmittance (unit: %): Haze and light transmittance (total light transmittance) were measured on a 1 mm thick specimen using a haze meter (NDH 2000, Nippon Denshoku) in accordance with ASTM D1003.
(2) Flame retardancy: Flame retardancy was measured on a 0.6 mm thick specimen by the UL-94 vertical test method.
(3) Chemical resistance (post-painting impact resistance): A 2 mm thick specimen was immersed in a thinner solution for 2 minutes and 30 seconds, dried at 80°C for 20 minutes, left at room temperature for 24 hours, and then subjected to impact with a drop test apparatus using a 2 kg weight in a DuPont drop test method to measure a fracture height (unit: cm), at which the specimen was broken.
(4) Notched Izod impact strength (unit: kgf·cm/cm): Notched Izod impact strength was measured on a 1/8" thick Izod specimen in accordance with ASTM D256.

**Table 1**

| | Example | | | | | | | |
|---|---|---|---|---|---|---|---|---|
| | 1 | 2 | 3 | 4 | 5 | 6 | 7 | 8 |
| (A) (parts by weight) | 45 | 45 | 45 | 45 | 45 | 45 | 80 | 60 |
| (B) (parts by weight) | 55 | 55 | 55 | 55 | 55 | 55 | 20 | 40 |
| (C) (parts by weight) | 4 | 8 | 12 | 12 | 8 | 8 | 8 | 8 |
| (D1) (parts by weight) | 1 | 1 | 1 | 0.2 | 0.2 | 1.5 | 0.2 | 0.2 |
| (D2) (parts by weight) | - | - | - | - | - | - | | |
| Haze (%) | 2.2 | 2.2 | 2.2 | 2.0 | 2.1 | 2.8 | 2.1 | 2.1 |
| Light transmittance (%) | 89.3 | 89.3 | 89.3 | 89.2 | 89.3 | 88.9 | 89.3. | 89.3 |
| Flame retardancy | V-1 | V-0 | V-0 | V-0 | V-0 | V-0 | V-0 | V-0 |
| Fracture height (cm) | 72 | 65 | 61 | 60 | 60 | 75 | 56 | 63 |
| Notched Izod Impact strength (kgf·cm/cm) | 67 | 65 | 62 | 63 | 65 | 72 | 65 | 66 |

| | | | | | | | | |
|---|---|---|---|---|---|---|---|---|
| *Parts by weight: parts by weight relative to 100 parts by weight of base resin (A+B) | | | | | | | | |

**Table 2**

| | Comparative Example | | | | | |
|---|---|---|---|---|---|---|
| | 1 | 2 | 3 | 4 | 5 | 6 |
| (A) (parts by weight) | 45 | 45 | 45 | 45 | 45 | 98 |
| (B) (parts by weight) | 55 | 55 | 55 | 55 | 55 | 2 |
| (C) (parts by weight) | 0.5 | 20 | 8 | 8 | 8 | 8 |
| (D1) (parts by weight) | 1 | 1 | 0.01 | 3 | - | 0.2 |
| (D2) (parts by weight) | - | - | - | - | 1 | - |
| Haze (%) | 2.2 | 2.2 | 2.1 | 32.0 | 93.5 | 2.4 |
| Light Transmittance (%) | 89.3 | 89.3 | 89.5 | 79.2 | 55.4 | 89.1 |
| Flame Retardancy | HB | V-0 | V-2 | V-0 | V-0 | V-2 |
| Fracture height (cm) | 75 | 10 | 22.5 | 55 | 65 | 12.5 |
| Notched Izod Impact strength (kgf·cm/cm) | 65 | 8 | 10 | 58 | 60 | 9 |

| | | | | | | |
|---|---|---|---|---|---|---|
| *Parts by weight: parts by weight relative to 100 parts by weight of base resin (A+B) | | | | | | |

From the result, it could be seen that the polycarbonate resin compositions according to the present invention had excellent properties in terms of transparency (haze and light transmittance), flame retardancy (in thin films), chemical resistance (fracture height), impact resistance (notched Izod impact strength), and the like.

Conversely, it could be seen that the polycarbonate resin composition of Comparative Example 1 prepared using an insufficient amount of the phosphazene compound suffered from deterioration in flame retardancy, and the like, and the polycarbonate resin composition of Comparative Example 2 prepared using an excess of the phosphazene compound suffered from deterioration in impact resistance, chemical resistance, and the like. It could be seen that the polycarbonate resin composition of Comparative Example 3 prepared using an insufficient amount of the polydimethylsiloxane having a terminal reactive group suffered from deterioration in impact resistance, chemical resistance, and the like; the polycarbonate resin composition of Comparative Example 4 prepared using an excess of the polydimethylsiloxane having a terminal reactive group suffered from deterioration in transparency, and the like; and the polycarbonate resin composition of Comparative Example 5 prepared using polydimethylsiloxane (D2) instead of the polydimethylsiloxane having a terminal reactive group suffered from deterioration in transparency, and the like. In addition, it could be seen that the polycarbonate resin composition of Comparative Example 6, where the contents of the polycarbonate resin and the polysiloxane-polycarbonate copolymer resin were outside the scope of the invention, suffered from deterioration in impact resistance, chemical resistance, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the invention. The scope of the invention should be defined by the appended claims rather than by the foregoing description, and the claims and equivalents thereto are intended to cover such modifications and the like as would fall within the scope of the invention.

## Claims

1. A polycarbonate resin composition comprising:
about 100 parts by weight of a base resin comprising about 95 wt% or less of a polycarbonate resin and about 5 wt% or more of a polysiloxane-polycarbonate copolymer resin;
about 1 part by weight to about 15 parts by weight of a phosphazene compound; and
about 0.1 parts by weight to about 2 parts by weight of a polydimethylsiloxane having a terminal reactive group and having a kinematic viscosity of about 5 cSt to about 200 cSt, as measured at 40°C in accordance with ASTM D445.

2. The polycarbonate resin composition according to claim 1, wherein the polycarbonate-polysiloxane copolymer resin comprises about 70 wt% to about 99 wt% of a polycarbonate block and about 1 wt% to about 30 wt% of a polysiloxane block.

3. The polycarbonate resin composition according to claim 1 or 2, wherein the polycarbonate-polysiloxane copolymer resin has a weight average molecular weight of about 10,000 g/mol to about 50,000 g/mol, as measured by gel permeation chromatography (GPC).

4. The polycarbonate resin composition according to any one of claims 1 to 3, wherein the phosphazene compound is a cyclic phosphazene compound.

5. The polycarbonate resin composition according to any one of claims 1 to 4, wherein the terminal reactive group of the polydimethylsiloxane comprise at least one of a hydroxyl group, an epoxy group, and a maleic anhydride group.

6. The polycarbonate resin composition according to any one of claims 1 to 5, wherein a weight ratio of the polydimethylsiloxane having a terminal reactive group to the phosphazene compound ranges from about 1:2 to about 1:70.

7. The polycarbonate resin composition according to any one of claims 1 to 6, wherein the polycarbonate resin composition has a haze of about 3% or less and a light transmittance of about 86% or more, as measured on a 1 mm thick specimen in accordance with ASTM D1003.

8. The polycarbonate resin composition according to any one of claims 1 to 7, wherein the polycarbonate resin composition has a flame retardancy of V-2 or higher, as measured on a 0.6 mm thick specimen by the UL-94 vertical test method.

9. The polycarbonate resin composition according to any one of claims 1 to 8, wherein the polycarbonate resin composition has a fracture height of about 50 cm or higher, at which a 2 mm thick specimen is broken upon application of impact with a drop test apparatus using a 2 kg weight in a DuPont drop test method after the specimen is immersed in a thinner solution for 2 minutes and 30 seconds, dried at 80°C for 20 minutes, and left for 24 hours at room temperature.

10. The polycarbonate resin composition according to any one of claims 1 to 9, wherein the polycarbonate resin composition has a notched Izod impact strength of about 55 kgf·cm/cm or more, as measured on a 1/8" thick specimen in accordance with ASTM D256.

11. A molded article formed of the polycarbonate resin composition according to any one of claims 1 to 10.
